# EUROPÄISCHE PATENTSCHRIFT

(11) **EP 4 155 023 B1**
(45) Veröffentlichungstag und Bekanntmachung des Hinweises auf die Patenterteilung: **12.11.2025**
(21) Anmeldenummer: 21198963.7
(22) Anmeldetag: 24.09.2021
(51) Int. Cl.: B23Q 3/12, B23B 3/22, B24B 41/00, B24B 41/04, B24B 45/00, B24B 55/02, B23Q 11/00, B23B 29/02, B23C 5/00

(54) **AUFNAHME FÜR EIN ROTIERENDES WERKZEUG**
HOLDER FOR A ROTATING TOOL
LOGEMENT POUR UN OUTIL ROTATIF

(43) Veröffentlichungstag der Anmeldung: 29.03.2023
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(56) Entgegenhaltungen:
- EP-A1- 3 162 498
- EP-A1- 3 461 585
- WO-A1-2019/016161
- DE-A1- 102005 043 626
- US-A- 3 663 116
- US-A1- 2018 009 042

## Beschreibung

Die Erfindung betrifft eine Aufnahme für ein rotierendes Werkzeug.

Im Stand der Technik sind eine Vielzahl von rotierenden Werkzeugen bekannt, welche bei entsprechend verschiedenen Bearbeitungsprozessen eingesetzt werden können. Beispielsweise Messerköpfe oder Scheibenfräser (fürs Fräsen), Sägeblätter (fürs Sägen) oder Schleifscheiben (fürs Schleifen).

Es ist auch bekannt, dass Schleifen zu den spanenden Fertigungsverfahren zählt und in der Regel im Bereich der Fein- und Endbearbeitung von Werkstücken angewandt wird.

Da mit klassischen, schleifenden Verfahren seit jeher nur ein vergleichsweise geringer Materialabtrag (z. B. im Vergleich zum Fräsen) zu erzielen war, ist die Entwicklung in Richtung des sogenannten Hochleistungsschleifens bei Werkzeugmaschinen vorangetrieben worden. Hierdurch kann teilweise der 100-fache bis 1000-fache Materialabtrag im Vergleich zu dem klassischen Schleifverfahren generiert werden (vgl. DE 20 2017 000 560 U1).

Für den Schleifprozess werden Werkzeugmaschinen eingesetzt, welche mit in Schleifscheibenaufnahmen gehaltenen bzw. aufgenommenen Schleifwerkzeugen, kurz auch nur Schleifscheiben, bestückt sind. Wurden früher dafür spezielle Schleifmaschinen verwendet, so wird der Schleifprozess heute vermehrt auf Fräsmaschinen durchgeführt, insbesondere wenn große und schwere Werkstücke bearbeitet werden sollen. Dadurch lassen sich auch tief liegende und schlecht zugängliche Flächen in einer Aufspannung bearbeiten. Voraussetzung dafür sind lang auskragende Schleifscheibenaufnahmen mit hoher Steifigkeit.

Eine solche Schleifscheibenaufnahme mit aufgenommener Schleifscheibe ist beispielsweise aus der DE 20 2017 000 560 U1 bekannt.

Eine solche Schleifscheibenaufnahme umfasst dabei im Wesentlichen einen rotationssymmetrischen zylindrischen Aufnahmegrundkörper, einerends diesem eine Schleifscheibenauflage und mindestens einen Spannflansch, mittels diesem das Schleifwerkzeug bzw. die Schleifscheibe zwischen Schleifscheibenauflage und Spannflansch verspannt wird.

Andererends des Aufnahmegrundkörpers weist dieser eine Schnittstelle auf, die die Verbindung zwischen der Schleifscheibenaufnahme und einer Schleifspindel (für andere (rotierende) Werkzeugs im Allgemeinen Arbeitsspindel) einer Werkzeugmaschine herstellt.

Über einen inneren Kanal im sonstig einstückig ausgebildeten Aufnahmegrundkörper kann Kühlmittel - von der arbeitsspindelseitigen Schnittstelle zu der Schleifscheibenauflage - geleitet werden.

Weiter sieht die Schleifscheibenaufnahme aus der DE 20 2017 000 560 U1 ein im Inneren des Aufnahmegrundkörpers angeordnetes Dämpfungselement vor, welches durch das schleifende Bearbeiten des Werkstücks hervorgerufene Schwingungen dämpfen soll.

Bei schnell rotierenden Bauteilen, wie dies insbesondere im Falle von Werkzeugmaschinen beim Hochleistungsschleifen oder anderen Bearbeitungsprozessen vorliegt, können, wie die DE 20 2017 000 560 (im Falle des Hochleistungsschleifen) beschreibt, nämlich mögliche Unwuchten im Werkzeugsystem zu immensen Schwingungen im Werkzeugsystem bzw. am Schleifwerkzeug führen, was - wird nun mit einem derart schwingenden Schleifwerkzeug versucht, Material vom Werkstück abzutragen, - unweigerlich zu einem ungenügenden Schleifergebnis führt. Im schlimmsten Fall kann dies auch zur Beschädigung bzw. Zerstörung des Werkzeugsystems führen.

Die DE 20 2017 000 560 U1 stellt auch fest, dass Schwingungen eines Ausmaßes, wie sie im Bereich eines Hochleistungsschleifens auftreten können, auch durch ein solchermaßen wie bei ihr vorgesehenes Dämpfungselement nicht ausreichend abgemildert werden können.

Aus der EP 3 461 585 A1, der WO 2019/016161 A1, der US 2018/009042 A1, der US 3 663 116 A und der EP 3 162 498 A1 sind verschiedene Aufnahmen für rotierende Werkzeuge bekannt. Diese Aufnahmen sehen einen rotationssymmetrischen, hohlzylinderförmigen Aufnahmegrundkörper und ein im Hohlraum des Aufnahmegrundkörpers beabstandet vom Zylindermantel des Aufnahmegrundkörpers angeordnetes Durchgangsrohr vor.

Aus der DE 10 2005 043 626 A1 ist eine weitere Aufnahme für ein rotierendes Werkzeug bekannt, mit einem rotationssymmetrischen, hohlzylinderförmigen Aufnahmegrundkörper und einem im Hohlraum des Aufnahmegrundkörpers beabstandet vom Zylindermantel des Aufnahmegrundkörpers gegen den Aufnahmegrundkörper verspannt angeordneten Durchgangsrohr.

Es ist Aufgabe der Erfindung, die im Stand der Technik bekannten Aufnahmen für rotierende Werkzeuge, wie beispielsweise Messerköpfe, Sägeblätter oder Schleifscheiben, zu verbessern, insbesondere auch eine Aufnahme zu schaffen, welche ein gutes Dämpfungsverhalten zeigt.

Diese Aufgabe wird gelöst durch eine Aufnahme für rotierende Werkzeuge - mit den Merkmalen des unabhängigen Anspruchs.

Vorteilhafte Weiterbildungen der Erfindung sind Gegenstand abhängiger Ansprüche sowie der nachfolgenden Beschreibung.

Gegebenenfalls verwendete Begriffe, wie oben, unten, vorne, hinten, links oder rechts sowie innen oder außen sind - soweit nicht anders explizit definiert - nach üblichem Verständnis zu verstehen. Begriffe, wie radial und axial, sind, soweit verwendet und nicht anders explizit definiert, in Bezug auf Mittel- bzw. Symmetrie- oder Drehachse der hier beschriebenen Aufnahme oder deren Bauteile/Komponenten zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Rotierende Werkzeuge können beispielsweise Messerköpfe, Sägeblätter, Schleifscheiben, Fräser, wie zum Beispiel Scheibenfräser, Bohrer und Ähnliches sein.

Die Aufnahme weist einen rotationssymmetrischen, hohlzylinderförmigen Aufnahmegrundkörper auf.

Im Hohlraum des Aufnahmegrundkörpers ist - beabstandet vom Zylindermantel des (hohlzylinderförmigen) Aufnahmegrundkörpers - ein Durchgangsrohr gegen den Aufnahmegrundkörper verspannt angeordnet.

Insbesondere ist das Durchgangsrohr rotationssymmetrisch und/oder koaxial zum Aufnahmekörper (bzw. dessen Mittel-/Symmetrie-/Drehachse) in diesem angeordnet.

Insbesondere ist es auch zweckmäßig, wenn das Durchgangsrohr ein Kühlmittelrohr, insbesondere ein gegen den Hohlraum abgedichtetes Kühlmittelrohr, ist. Als Teil eines Kühlmittelversorgungsystems kann so das Durchgangsrohr bzw. Kühlmittelrohr Kühlmittel von einerends des Aufnahmegrundkörpers (Schnittstelle Arbeits-/Schleifspindel), durch diesen bis andererends des Aufnahmegrundkörpers (Werkzeugauflage/Werkzeug (beispielsweise Schleifscheibenauflage/Schleifscheibe)) leiten.

Eine andererends des Durchgangsrohrs vorgesehene, insbesondere konusförmig ausgebildete, Spannschulter ist zur Verspan nung mit einem mit dem Aufnahmegrundkörper verbundenen, sich dort (kraftschlüssig) abstützenden anderen Bauteil, wie einer Werkzeugauflage, beispielsweise Schleifscheibenauflage, vorgesehen.

D.h., das Durchgangsrohr stützt sich an dem mit dem Aufnahmegrundkörper verbundenen anderen Bauteil bzw. der Werkzeug- bzw. Schleifscheibenauflage, beispielsweise dieses bzw. diese verschraubt oder verstiftet mit dem Aufnahmegrundkörper, ab - , wodurch so die Verspannung des Durchgangsrohrs gegen den Aufnahmegrundkörper (indirekt) bewirkt werden kann.

Die erfindungsgemäße Aufnahme vereint - durch ihren vorgesehenen Aufbau - mehrere vorteilhafte Wirkungen.

So bewirkt ihr modularer Aufbau mehrerer zusammenfügbarer bzw. -gefügter Bauteile, wie der Aufnahmegrundkörper und das im Hohlraum des Aufnahmegrundkörpers angeordnete Durchgangsrohr, und dadurch auftretende Fügestellen eine dämpfende Wirkung, was als Fügestellendämpfung bekannt ist, wird nämlich an Fügestellen bzw. an den Schnittstellen zwischen Bauteilen Energie dissipiert.

Der bei der Aufnahme ferner vorgesehene - innen hohle - hohlzylinderförmige Aufnahmegrundkörper ermöglicht eine spürbare Gewichtsreduktion (ca. 40%) bei der Aufnahme (in Vergleich zu herkömmlichen Aufnahmen).

Die bei der Aufnahme darüber hinaus gegebenenfalls auch vorsehbare Verspannung des (inneren) Durchgangsrohr gegen den Aufnahmegrundkörper führt zu einer erhöhten Steifigkeit des Systems.

Kurz, die erfindungsgemäße Aufnahme zeichnet sich durch hohe Steifigkeit, geringes Gewicht und hohe dämpfende Wirkung aus.

Nach einer Weiterbildung ist vorgesehen, dass einerends des Durchgangsrohrs ein Gewinde vorgesehen ist. Andererends kann beispielsweise eine - die Verspannung mit dem Aufnahmegrundkörper bewirkende - Spannschulter angeordnet vorgesehen sein. Insbesondere zweckmäßig ist es, wenn die Spannschulter einen Konus (mit vorgebbaren Konuswinkel) aufweist (, welches sich gegen eine Spannschulter mit einem komplementären Konus abstützt).

Kann so das Durchgangsrohr - ähnlich einer Langschraube - verschraubt - und so ihre axiale Position ver-/eingestellt werden, so kann dadurch die Verspannung des Durchgangsrohrs (stufenlos) eingestellt werden.

Ein solches Gewinde kann beispielsweise ein am Durchgangsrohr vorgesehenes Außengewinde (oder dort vorgesehenes Innengewinde) sein. Ein komplementäres Gewinde für die Verschraubung mit dem Durchgangsrohr kann am Aufnahmegrundkörper selbst - oder an einem im Aufnahmegrundkörper angeordneten Bauteil, wie einem Halter bzw. Durchgangsrohrhalter oder einem Einsatz(-bauteil), angeordnet sein.

Auch eine Abdichtung kann an der Verschraubungsstelle (oder in deren Nähe) vorgesehen sein, welche die Schnittstelle zwischen Durchgangsrohr und Aufnahmegrundkörper bzw. Bauteil/Durchgangsrohrhalter abdichtet. Aufgabe einer solchen Dichtung (, wie auch im Folgenden beschriebener ähnlichen Dichtungen an und um das Durchgangsrohr) ist, einen Eintritt von Kühlmittel - aus dem Durchgangsohr - als Kühlmittelrohr - in den Hohlraum des Aufnahmegrundkörpers zu verhindern.

Dieses - mit dem Durchgangsrohr zu verschraubende und an dem Aufnahmegrundkörper angeordnete - Bauteil bzw. der Durchgangsrohrhalter kann beispielsweise mit dem Aufnahmegrundkörper (unter Verwendung von Stiften) insbesondere drehfest verbunden, beispielsweise verstiftet, sein. Auch hier kann eine Dichtung (s. oben) zwischen den Bauteilen vorgesehen sein.

Nach einer Weiterbildung ist weiter beispielsweise auch vorgesehen, dass mit dem Durchgangsrohrhalter ein Kühlmittelzuführrohr verbunden, insbesondere verschraubt, ist, welcher der Zuführung von Kühlmittel dient. Eine Abdichtung (s. oben) zwischen den Bauteilen kann auch vorgesehen und zweckmäßig sein.

Auch kann weiterbildend vorgesehen sein, dass zwischen dem Durchgangsrohr und dem Durchgangsrohrhalter eine Hülse angeordnet, insbesondere abgedichtet (s. oben) angeordnet, ist.

Dabei kann es zweckmäßig sein, wenn die Hülse axial in eine Aufnahmebohrung in dem Durchgangsrohrhalter (nur frei) eingeschoben ist, da so - bei einer axialen Einstellung des Durchgangsrohrs (vgl. Einstellung der Verspannung, beispielsweise über die Verschraubung) eine freie axiale Verschiebung der Bauteile gewährleistet ist.

Schnittstellen/Kontaktflächen zwischen den Bauteilen können abgedichtet sein.

Auch kann vorgesehen sein, Schleifscheibenauflage mehrteilig auszubilden.

Zweckmäßig ist es, wenn die Werkzeug- bzw. Schleifscheibenauflage mindestens eine in den Hohlraum (des holzylinderförmigen Aufnahmegrundkörpers) mündende, insbesondere mittels einer Verschlussschraube verschließbare, Einfüllbohrung aufweist. Über eine solche Einfüllbohrung können (später noch beschriebene) Dämpf- bzw. Dämpfungsmaterialien bzw. Dämpfstoffe, wie Schäume, beispielsweise Aluschäume, Elastomere u.Ä., in den Hohlraum eingefüllt werden.

Die Verspannung des Durchgangsrohrs (gegen den Aufnahmekörper) über die Spannschulter am Durchgangsrohr lässt sich zweckmäßig über einen entsprechenden Konus (mit vorgebbaren Konuswinkel) am Durchgangsrohr - beispielsweise an einem Außenumfang des Durchgangsrohrs als Außenkonus - realisieren. Konuswinkel können in weiten Bereichen variieren, beispielsweise können sehr steile Konusse mit Konuswinkel von ca. 40° bis 60°, oder auch sehr flache Konusse mit Konuswinkel von ca. 5° bis 20° realisiert werden.

Eine komplementäre Gegenschulter/Gegenkonus - am Aufnahmegrundkörper oder an dem anderen Teil bzw. der Werkzeug- bzw. Schleifscheibenauflage - ist entsprechend zweckmäßig dann vorzusehen.

Zweckmäßig ist es auch, wenn ein mit der Werkzeug- bzw. Schleifscheibenauflage verschraubbares Halte- bzw. Spannelement, wie beispielsweise eine Spannschraube oder ein Spannflansch, für das Werkzeug- bzw. die Schleifscheibe vorgesehen ist. Zwischen Werkzeug- bzw. Schleifscheibenauflage und Halte-/Spannelement bzw. Spannschraube/-flansch angeordnet - kann so das Werkzeug bzw. die Schleifscheibe verspannt (gehalten) werden.

Auch mit einer (direkten) Verschraubung, beispielsweise mittels (Lang-/Spann-)Schrauben oder Ähnlichem, kann das Werkzeug an der Werkzeug- bzw. Schleifscheibenauflage gehalten bzw. befestigt, beispielsweise verschraubt, sein. Gegebenenfalls können hier auch noch weitere Halteelemente vorgesehen sein, beispielsweise Mitnehmersteine.

Zweckmäßigerweise kann in der Werkzeug- bzw. Schleifscheibenauflage eine sich axial durch die Werkzeug- bzw. Schleifscheibenauflage hindurch erstreckende Kühlmittelbohrung vorgesehen sein, mittels welcher Kühlmittel (axial) durch die Werkzeug- bzw. Schleifscheibenauflage hindurch geleitet werden kann.

Ferner kann auch in dem Halte-/Spannelement bzw. Spannschraube/-flansch eine sich axial durch das Halte-/Spannelement bzw. Spannschraube/-flansch hindurch erstreckende, insbesondere mittels einer Verschlussschraube verschließbare, Kühlmittelbohrung vorgesehen sein.

Auch kann vorgesehen sein, dass radiale Kühlmitteldurchgangsbohrungen in dem Halte-/Spannelement bzw. Spannschraube/- flansch vorgesehen sind, welche sich insbesondere von der axialen Kühlmittelbohrung in dem Halte-/Spannelement bzw. Spannschraube/-flansch bis an dessen Außenumfang(-fläche) erstrecken. So kann Kühlmittel - durch das Halte-/Spannelement bzw. Spannschraube/-flansch hindurch - bis an das Werkzeug bzw. die Schleifscheibe geleitet werden.

Weist das Werkzeug, beispielsweise die Schleifscheibe, selbst darüber hinaus Poren auf, so kann auch diese auf diese Weise gut gekühlt werden.

Darüber hinaus kann auch eine an einer Schnittstelle zwischen dem Durchgangsrohr und dem Halte-/Spannelement bzw. Spannschraube/-flansch zwischen dem Durchgangsrohr und dem Halte-/Spannelement bzw. Spannschraube/-flansch angeordnete, insbesondere abgedichtete (s. oben), Hülse vorgesehen sein, welche eine - dichte - Durchleitung von Kühlmittel von Durchgangsrohr zu Halte-/Spannelement bzw. Spannschraube/-flansch bzw. über dortiger Schnittstelle zur Verfügung stellen kann.

Ferner ist es zweckmäßig -, um Unwuchten das Systems ausgleichen zu können, - wenn Bohrungen für Wuchtschrauben an einer Außenumfangsfläche des Aufnahmegrundkörpers und/oder der Werkzeug- bzw. Schleifscheibenauflage angeordnet sind. Auch an anderen Stellen an der Aufnahme können solche Bohrungen (für Wuchtschrauben) vorgesehen sein.

Die Dämpfung der Aufnahme kann weiter dadurch erhöht werden, wenn mindestens ein Dämpfungskörper bzw. eine Schwingungsmasse bei der Aufnahme vorgesehen ist, insbesondere mehrere oder eine Vielzahl von Dämpfungskörper bzw. Schwingungsmassen.

Prinzipiell können solche Dämpfungskörper nach Form und/oder Material und/oder Ort bei der Aufnahme beliebig bzw. in weiten Bereichen variabel sein.

Ist erfindungsgemäß der Aufnahmegrundkörper als hohlzylindrisches Rohr vorgesehen, so ist es insbesondere und bevorzugt zweckmäßig, wenn im Hohlraum des Aufnahmegrundkörpers mindestens ein Dämpfungskörper angeordnet ist. (Alternativ mag auch eine Außenseite am Aufnahmegrundkörper möglich sein.)

Hier kann es zweckmäßig sein, wenn der mindestens eine Dämpfungskörper eine Ringscheibe oder eine Hülse, insbesondere eine in den Hohlraum eingeschobene, dort gehaltene, eingepresste und/oder verspannte Ringscheibe oder Hülse, insbesondere eine Ringscheibe oder Hülse aus Kunststoff, Metall (gegebenenfalls auch Schwermetall, also einem Metall, das eine wesentlich höhere Dichte aufweist als Stahl, wie z. B. Wolfram) oder Gummi, ist.

Auch kann vorgesehen sein, dass der mindestens eine Dämpfungskörper ein - im Hohlraum des Aufnahmegrundkörpers - von dem Zylindermantel (des Aufnahmegrundkörpers) und/oder vom Durchgangsrohr beabstandet gehaltener, insbesondere mittels eines Ringes, im Speziellen mittels eines Gummi- oder Kunststoffringes, beabstandet gehaltener, Dämpfungskörper, insbesondere aus einem Schwermetall oder einem Kunststoff, ist.

Insbesondere kann es auch zweckmäßig sein, wenn mehrere, insbesondere eine Vielzahl, im Hohlraum angeordnete Dämpfungskörper vorgesehen sind.

Weiterbildend kann dann auch vorgesehen sein, dass die mehreren bzw. die vielen Dämpfungskörper mittels Hülsen axial beabstandet gehaltene Ringscheiben sind, welche insbesondere mittels Ringe, im Speziellen mittels Gummi- oder Kunststoffringe, vom Zylindermantel (des Aufnahmegrundkörpers) oder vom Durchgangsrohr beabstandet gehalten werden.

Auch kann vorgesehen sein, dass die mehreren bzw. die vielen Dämpfungskörper unmittelbar aneinander anliegende Ringscheiben ("Stapel(-bildung)") sind.

Auch kann in dem Hohlraum ein (bereits erwähnter) Dämpfstoff eingebracht ist, insbesondere ein Elastomer oder ein (Alu- ) Schaum.

Für die Anbindung an die Arbeits-/Schleifspindel ist es zweckmäßig, wenn die Aufnahme eine Schnittstelle für eine Arbeits-/Schleifspindel vorsieht, beispielsweise einen HSK oder Steilkegel. Jedoch können auch andere, nicht standardisierte Verbindungsmöglichkeiten/Schnittstellen Anwendung finden. Die Schnittstelle kann dabei einerends einstückig an dem Aufnahmegrundkörper oder als separates Bauteil an dem Aufnahmegrundkörper angeordnet sein. Auch die Schnittstelle selbst kann ihrerseits ein- oder mehrteilig ausgeführt sein.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale.

Es zeigen:
- FIG 1: eine Schleifscheibenaufnahme gemäß einer erfindungsgemäßen Ausführung,
- FIG 1a: einen Ausschnitt der Schleifscheibenaufnahme gemäß der erfindungsgemäßen Ausführung nach FIG 1 - mit der Verschraubung der Schleifscheibenauflage mit dem Aufnahmegrundkörper,
- FIG 2: eine Schleifscheibenaufnahme gemäß einer erfindungsgemäßen Ausführung,
- FIG 3: eine Schleifscheibenaufnahme gemäß einer erfindungsgemäßen Ausführung,
- FIG 4: eine Schleifscheibenaufnahme gemäß einer erfindungsgemäßen Ausführung,
- FIG 5: eine Schleifscheibenaufnahme gemäß einer erfindungsgemäßen Ausführung,
- FIG 6: eine Schleifscheibenaufnahme gemäß einer erfindungsgemäßen Ausführung,
- FIG 7: eine Schleifscheibenaufnahme gemäß einer erfindungsgemäßen Ausführung,
- FIG 8: eine Schleifscheibenaufnahme gemäß einer erfindungsgemäßen Ausführung,
- FIG 9: eine Messerkopfaufnahme gemäß einer erfindungsgemäßen Ausführung,
- FIGen 9a und b: die Messerkopfaufnahme gemäß der erfindungsgemäßen Ausführung nach FIG 9 - in anderen Längsschnitten - mit der Verschraubung der Messerkopfauflage mit dem Aufnahmegrundkörper und Verschraubung des Messerkopfes mit der Messerkopfauflage,
- FIG 9c: einen Ausschnitt der Messerkopfaufnahme gemäß der erfindungsgemäßen Ausführung nach FIG 9 - in perspektivischer Darstellung,
- FIG 10: eine Scheibenfräseraufnahme gemäß einer erfindungsgemäßen Ausführung,
- FIG 10a: die Scheibenfräseraufnahme gemäß der erfindungsgemäßen Ausführung nach FIG 10 - in einem anderen Längsschnitt - mit der Verschraubung der Scheibenfräserauflage mit dem Aufnahmegrundkörper.

### - (modulare) Schleifscheibenaufnahme (FIGen 1 bis 8)

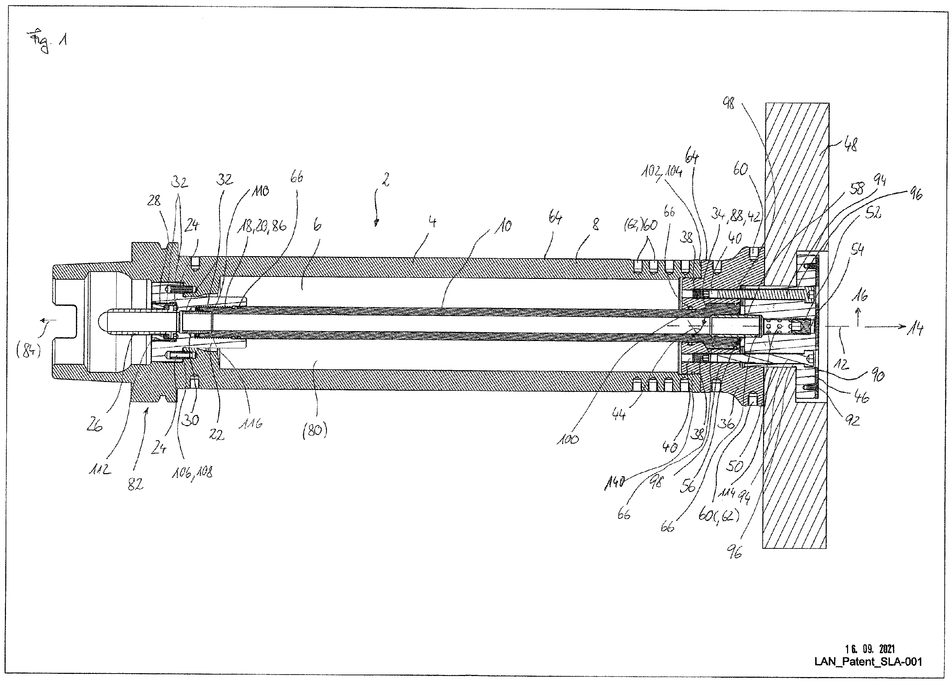

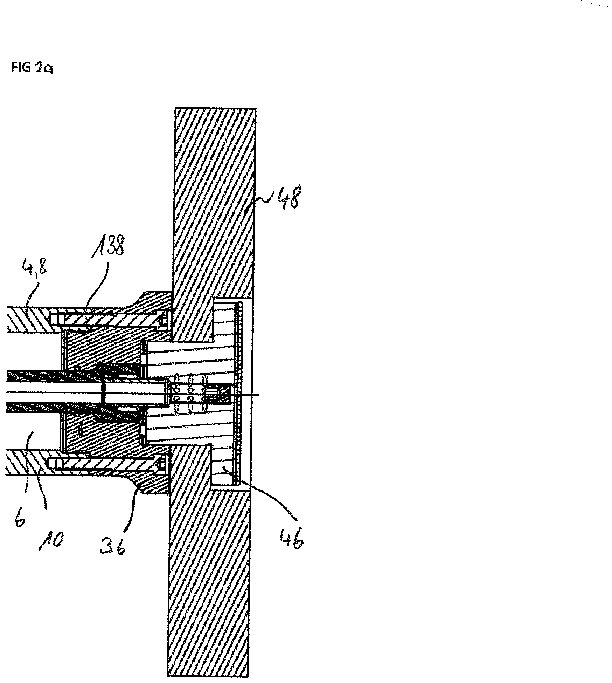

FIG 1 (mit der Ausschnittsdarstellung nach FIG 1a) zeigt eine modulare bzw. mehrteilige Schleifscheibenaufnahme 2.

Diese Schleifscheibenaufnahme 2 weist einen im Wesentlichen rotationssymmetrischen hohlzylindrischen Aufnahmegrundkörper 4 (mit Zylindermantel 8) auf.

Einerends diesem Aufnahmegrundkörper 4 ist eine Schleifscheibenauflage 36 mittels Schrauben 138 verschraubt am dem Aufnahmekörper 4 - angeordnet (vgl. FIG 1a; FIG 1a zeigt einen deckelseitigen Ausschnitt der Schleifscheibenaufnahme 2 in einem anderen (Längs-)Schnitt, welcher die Verschraubung 136 von Schleifscheibenauflage 36 und Aufnahmegrundkörper 4 zeigt). Auf dieser auf- bzw. an dieser anliegend wird, wie FIG 1 zeigt, zwischen der Schleifscheibenauflage 36 und einem Spannflansch 46 eine Schleifscheibe 48 verspannt (gehalten).

An dem Spannflansch 46 ist ein Deckel 90 angeschraubt (92), welcher eine sich zentral axial 14 durch den Spannflansch 46 hindurch erstreckende Kühlmittbohrung 54 abdeckt.

Wie FIG 1 auch zeigt, sieht der Spannflansch 46 radial 16 verlaufende Kühlmittelbohrungen 50 vor, welche sich von der zentralen axialen 14 Kühlmittelbohrung 54 radial 16 nach au-βen bis an die Außenseite 114 des Spannflansches 46 erstrecken.

Die sich zentral axial 14 durch den Spannflansch 46 hindurch erstreckende Kühlmittbohrung 54 ist deckelseitig mittels einer Verschlussschraube 52 verschlossen.

Die Verspannung der Schleifscheibe 48 - zwischen Spannflansch 46 und Schleifscheibenauflage 36 - erfolgt über eine Verschraubung von Spannflansch 46 und Schleifscheibenauflage 36 mittels Langschrauben 94, welche sich durch Durchgangsbohrungen 96 im Spannflansch 46 hindurch in Gewinde 98 (dort verschraubt) in Bohrungen 40, sogenannte Einfüllbohrungen 40 (s. nachfolgend zu deren Zweck), in der Schleifscheibenauflage 36 erstrecken.

Über diese Einfüllbohrungen 40, welche, wie FIG 1 auch zeigt, mittels Verschlussschrauben 38 verschließbar sind, kann in den Hohlraum 6 des (hohlzylindrischen) Aufnahmegrundkörpers ein Dämpfmaterial, wie beispielsweise ein Elastomer oder ein (Alu-)Schaum 80, eingefüllt werden (als optional angedeutet).

Wie FIG 1 auch zeigt, sind an der Außenumfangsfläche 64 von Aufnahmegrundkörper 4 und Schleifscheibenauflage 36 verschiedene Bohrungen 60, insbesondere Gewindebohrungen, für Wuchtschrauben (62, nicht gezeigt) eingebracht.

In dem hohlzylindrischen Aufnahmegrundkörper 4 ist - koaxial (bezüglich Mittel-/Symmetrie-/Drehachse 12) zum Aufnahmegrundkörper 4 - ein Durchgangsrohr 10, hier ein Kühlmittelrohr 10, angeordnet, welches deckelseitig in einer Durchgangsbohrung 100 in der Schleifscheibenauflage 36 (verspannt - dazu nachfolgend) - abgedichtet (gegen die Schleifscheibenauflage) durch einen Dichtring 66 - gehalten wird.

Wie FIG 1 zeigt, sieht das Kühlmittelrohr 10 an seinem deckelseitigen Ende eine (einen Außenkonus 42 bildende) konische - mit einen vorgebbaren Konuswinkel 44, beispielsweise ca. 50°, - Spannschulter 34 vor, welche gegen eine komplementäre Spannschulter 88 in der Durchgangsbohrung 100 der Schleifscheibenauflage 36 verspannt ist.

Diese Verspannung von Kühlmittelrohr 10 und Schleifscheibenauflage 36 bewirkt auch, dass die - mit dem Aufnahmegrundkörper 4 verschraubte (138) - Schleifscheibenauflage 36 über einen Flansch 102 an der deckelseitigen Stirnseite 104 des Aufnahmegrundkörpers 4 verspannt an- bzw. aufliegt bzw. gegen diese an die deckelseitige Stirnseite 104 des Aufnahmegrundkörpers 4 herangezogen wird - und so letztlich das Kühlmittelrohr 10 gegen den Aufnahmegrundkörper 4 verspannt ist -, was dem System eine hohe Steifigkeit verleiht.

Ein Dichtring 140 dichtet den Kontakt von Schleifscheibenaufnahme 36 und Aufnahmegrundkörper 4 ab.

Die Spannkraft(-aufbringung) für die Verspannung (von Kühlmittelrohr 10 und Schleifscheibenauflage 36 bzw. Kühlmittelrohr 10 und Aufnahmegrundkörper 4) erfolgt mittels einer Verschraubung 20 andererends des Kühlmittelrohrs 10.

Dazu sieht dort (andererends) das Kühlmittelrohr 10 ein - in ein Innengewinde 86 eines mit dem Aufnahmegrundkörper 4 drehfest verbundenen Durchgangsrohrhalters 22 (s. später) eingreifendes - Außengewinde 18 vor, über welches das Kühlmittelrohr 10 in den Durchgangsrohrhalter 22, genauer in eine Durchgangsbohrung 116 durch den Durchgangsrohrhalter 22 (dort deckelseitig), einschraubbar (Verschraubung 20) ist. Der axiale Einschraubweg bestimmt die Vorspannung (stufenlos).

Im Bereich der Verschraubung zwischen Kühlmittelrohr 10 und Durchgangsrohrhalter 22 ist auch eine Dichtung 66 (in Form eines Dichtrings 66) zwischen Kühlmittelrohr 10 und Durchgangsrohrhalter 22 vorgesehen.

Ferner ist, wie FIG 1 zeigt, in dem Kühlmittelrohr 10 - deckelseitig an der im Inneren der Schleifscheibenauflage 36 liegenden Schnittstelle 56 zwischen Kühlmittelrohr 10 und Spannflansch 22 - eine Hülse 58 in das Kühlmittelrohr 10 eingeschoben (, welche auch gegen das Kühlmittelrohr 10 abgedichtet ist (66)), deren anderes Ende in der axialen Kühlmittelbohrung 54 des Spannflansches 46 aufgenommen ist (auch hier abgedichtet 66).

Ferner ist, wie FIG 1 zeigt, in dem Kühlmittelrohr 10 - am deckelseitig abgewandten Ende - eine Hülse 30 bis an einen Anschlag 110 in das Kühlmittelrohr 10 eingeschoben (, welche auch gegen das Kühlmittelrohr 10 abgedichtet ist (32)), deren anderes Ende in die Durchgangsbohrung 116 durch den Durchgangsrohrhalter 22 eingeschoben ist, - hier aber axial frei ist, um einen maximalen axialen Verschraubungsweg zu gewährleisten. Auch hier ist eine Dichtung 32 - zwischen Hülse 30 und Durchgangsrohrhalter 22 - vorgesehen.

Wie FIG 1 auch zeigt, stützt sich der Durchgangsrohrhalter 22 über eine an ihm angeordnete Schulter 106 an einer (Gegen- )Schulter 108 im Inneren des Aufnahmegrundkörpers 4 ab. Stifte 24 verhindern ein Verdrehen des Durchgangsrohrhalters 22.

Ferner zeigt FIG 1, dass - am deckelseitig abgewandten Ende des Durchgangsrohrhalters 22 - ein Kühlmittelzuführrohr 26 - über eine Hülse 112 angeschraubt (Verschraubung 28) - mit dem Durchgangsrohrhalter (abgedichtet 32) verbunden ist.

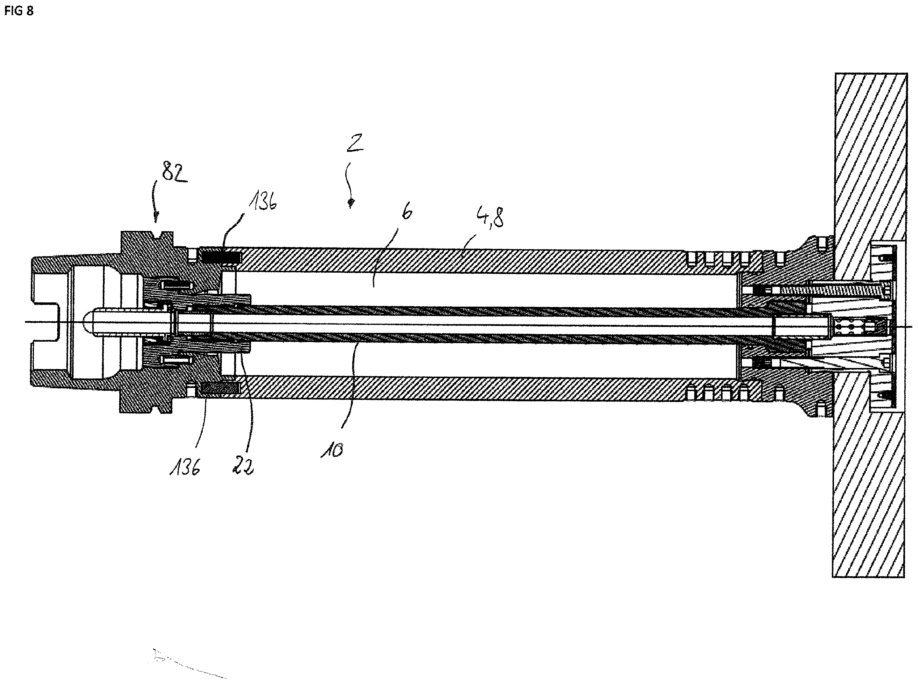

Schleifscheibenseitig andererends des Aufnahmegrundkörpers 4 ist (einstückig) an dem Aufnahmegrundkörper 4 eine Schnittstelle 82, hier ein HSK 82, angeordnet, die die Verbindung zwischen der Schleifscheibenaufnahme 4 und einer Arbeits-/Schleifspindel (84 nicht gezeigt) einer Werkzeugmaschine herstellt. (vgl. FIG 8, hier ist verdeutlicht, dass die hier mit dem Aufnahmegrundköper 4 einstückige Schnittstelle 82 auch durch ein separates - gegebenenfalls mittels Stifte 136 drehfest mit dem Aufnahmegrundkörper 4 verbundenes - Bauteil 82 ausgeführt sein kann)

Über das Kühlmittelzuführrohr 26, der Durchgangsbohrung 116 im Durchgangsrohrhalter 22, der deckelseitig abgewandten dortigen Hülse 30, dem Kühlmittelrohr 10, der deckelseitigen Hülse 58 und des die axiale Durchgangs-/Kühlmittelbohrung 54 und die radialen Kühlmittelbohrungen 50 aufweisenden Spannflansches 46 kann Kühlmittel bis an die Schleifscheibe 48 herangeführt werden. Poren (nicht verdeutlicht) in der Schleifscheibe 48 können das Kühlmittel in die Schleifscheibe 48 eindringen lassen. Beschriebene Dichtung (32, 66) in der Schleifscheibenaufnahme 4 bzw. an dortigen Bauteilen verhindern ein Eindringen des Kühlmittels in den Hohlraum 6.

Alternativ oder ergänzend hierzu kann das Kühlmittel auch durch radiale Bohrungen in der Schleifscheibenauflage 36 und/oder Spannflansch 46 von außen der Schleifscheibe 48 zugeführt werden (nicht dargestellt).

In den FIGen 2 bis 8 sind modifizierte und/oder weitergebildete Ausführungen der in FIG 1 gezeigten und im Obigen beschriebenen Schleifscheibenaufnahme 2 dargestellt.

Da diese Ausführungen von Schleifscheibenaufnahmen 2 (nach den FIGen 2 bis 8) im Wesentlichen der (beschriebenen) Schleifscheibenaufnahme 2 nach FIG 1 entsprechen, wird in den nachfolgenden Beschreibungen auf Wiederholungen von Beschreibungen identischer, gleichverwendeter Bauteilen bei den weiteren Schleifscheibenaufnahmen 2 in den FIGen 2 bis 8 verzichtet. Nur mehr die Modifikationen und Weiterbildungen (in den FIGen 2 bis 8) werden folgend dargestellt.

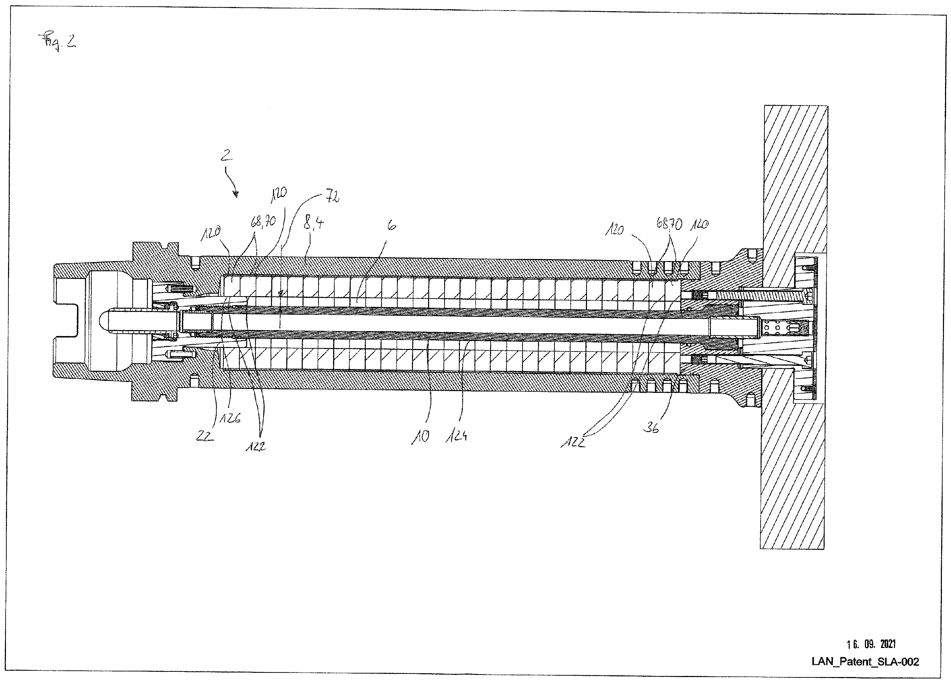

FIG 2 zeigt die Schleifscheibenaufnahme 2, wie sie durch zusätzliche Dämpfungselemente 68 in ihren Dämpfungsverhalten verbessert wird.

Wie FIG 2 zeigt, befinden sich im Inneren des Zylindermantels 8 des Aufnahmegrundkörpers 4 eine Vielzahl von (stapelartig aneinander angeordneten) Dämpfungselemente 68 - in Form von Ringscheiben 70.

Diese Ringscheiben 70 sind - über ihren Außenumfang 120 in den Zylindermantel 8 des Aufnahmegrundkörpers 4 - koaxial zu Aufnahmegrundkörper 4 und Durchgangsrohr/Kühlmittelrohr 10 - eingepresst - und erstrecken sich (im Hohlraum 6 im Aufnahmegrundkörper 4) im Wesentlichen über die gesamte axiale 14 Länge zwischen Durchgangsrohrhalter 22 und Schleifscheibenauflage 36.

Der Innenumfangsdurchmesser 122 der Ringscheiben 70 entspricht im Wesentlichen einem Außenumfangsdurchmesser 126 des Durchgangsrohrhalters 22 - und lässt so (dort, wo sie nicht auf dem Durchgangsrohrhalter 22 aufsitzen - vgl. FIG 2) einen radialen Abstand 72 zum Außenumfang 124 des Kühlmittelrohres 10.

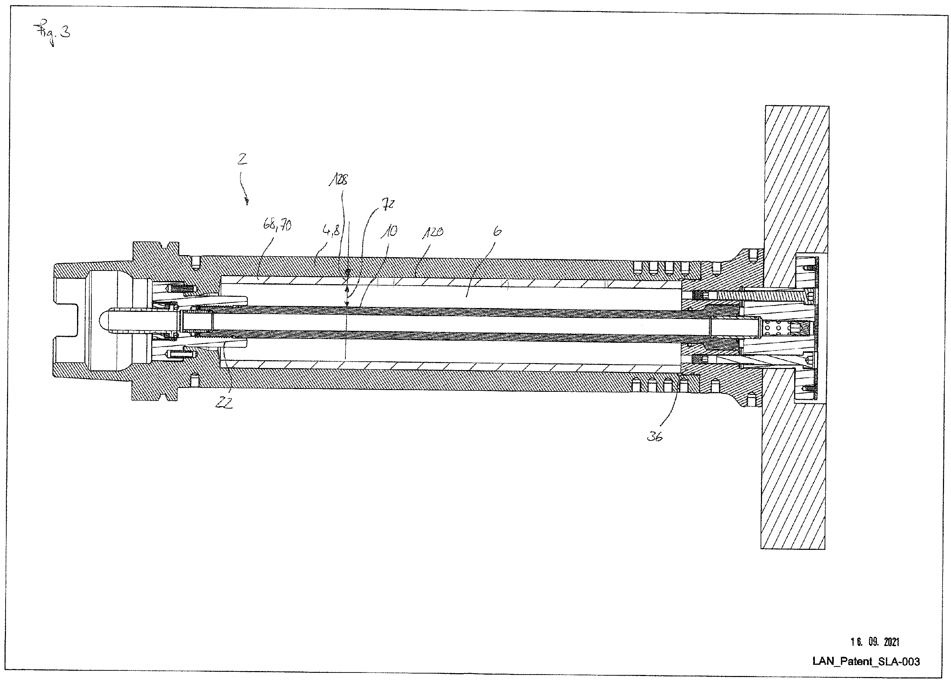

FIG 3 zeigt die Schleifscheibenaufnahme 2, wie sie durch ein anderes zusätzliches Dämpfungselement 68 in ihren Dämpfungsverhalten verbessert wird.

Wie FIG 3 zeigt, befindet sich im Inneren des Zylindermantels 8 des Aufnahmegrundkörpers 4 ein Dämpfungselement 68 - in Form einer Hülse 70.

Diese Hülse 70 ist - über ihren Außenumfang 120 in den Zylindermantel 8 des Aufnahmegrundkörpers 4 - koaxial zu Aufnahmegrundkörper 4 und Durchgangsrohr/Kühlmittelrohr 10 - eingepresst - und erstreckt sich (im Hohlraum 6 im Aufnahmegrundkörper 4) im Wesentlichen über die gesamte axiale 14 Länge zwischen Durchgangsrohrhalter 22 und Schleifscheibenauflage 36. Mittels der Schleifscheibenauflage 36 kann sie auch axial in dem Hohlraum 6 des Aufnahmegrundkörpers 4 verspannt sein.

Die Wandstärke 128 der Hülse 70 ist dünnwandig ausgebildet, so dass sich ein radialer Abstand 72 zum Außenumfang 124 des Kühlmittelrohres 10 ausbildet.

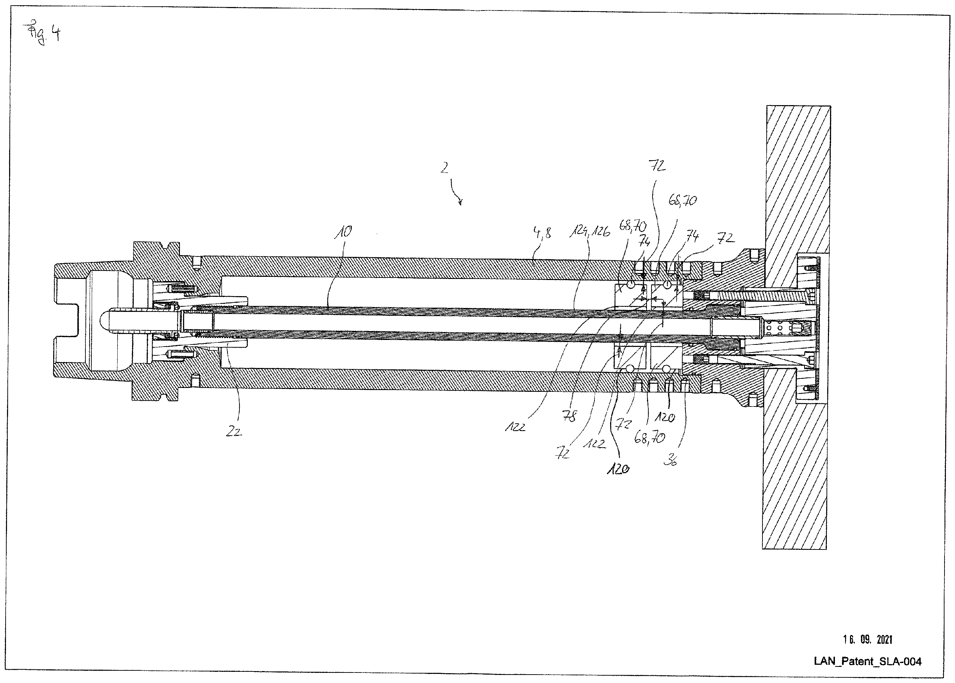

FIG 4 zeigt die Schleifscheibenaufnahme 2, wie sie durch wieder andere zusätzliche Dämpfungselemente 68 in ihren Dämpfungsverhalten verbessert wird.

Wie FIG 4 zeigt, befinden sich im Inneren der Zylindermantels 8 des Aufnahmegrundkörpers 4 zwei Dämpfungselementen 68 - in Form von Ringscheiben 70.

Diese Ringscheiben 70 sind - über an ihren Außenumfang 120 angeordnete (Gummi-)Ringe 74 in radialem Abstand 72 - in dem Zylindermantel 8 des Aufnahmegrundkörpers 4 - koaxial zu Aufnahmegrundkörper 4 und Durchgangsrohr/Kühlmittelrohr 10 - gehalten - und zwar (axial 14) am schleifscheibenauflagenseitigen Ende des Aufnahmegrundkörpers 4 - mit axialem Abstand 78 zueinander.

Ist der Innenumfangsdurchmesser 122 der Ringscheiben 70 größer als der Außenumfangsdurchmesser 126 des Durchgangsrohrs 10, so lassen die Ringscheiben 70 auch einen radialen Abstand 72 zum Außenumfang 124 des Kühlmittelrohres 10.

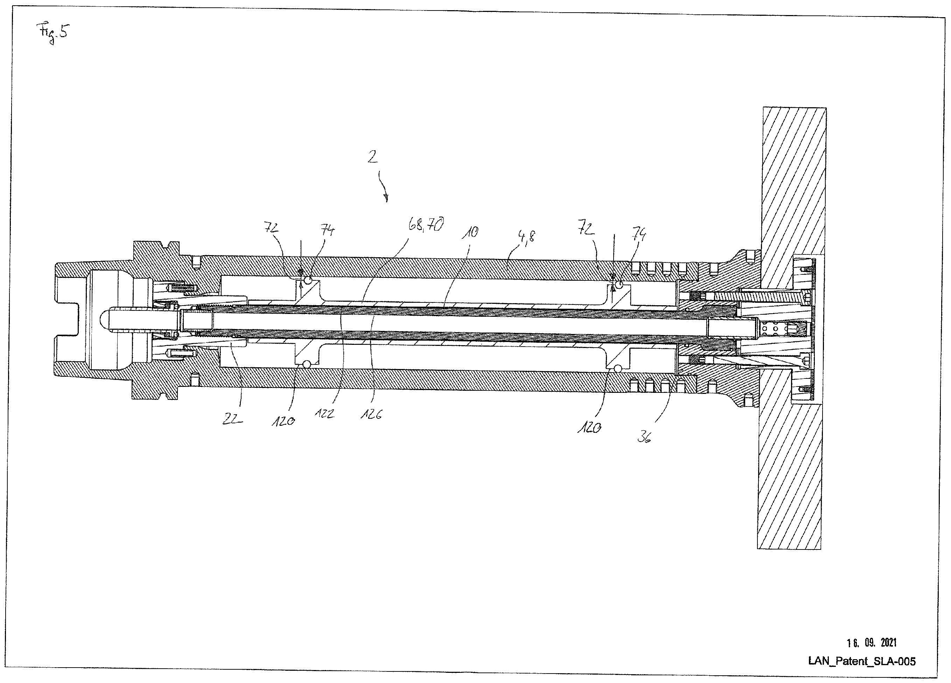

FIG 5 zeigt die Schleifscheibenaufnahme 2, wie sie - in diesem Fall - durch ein zusätzliches Dämpfungselement 68 in ihren Dämpfungsverhalten verbessert wird.

Wie FIG 5 zeigt, befindet sich im Inneren des Zylindermantels 8 des Aufnahmegrundkörpers 4 ein Dämpfungselement 68 - in Form eines hülsenförmigen Körpers 70, kurz auch wieder nur als Hülse 70 bezeichnet.

Diese Hülse 70 ist - über an zwei axial beabstandeten Stellen an ihrem Außenumfang 120 angeordneten (Gummi-)Ringen 74 in radialem Abstand 72 - in dem Zylindermantel 8 des Aufnahmegrundkörpers 4 - koaxial zu Aufnahmegrundkörper 4 und Durchgangsrohr/Kühlmittelrohr 10 - gehalten.

Der Innenumfangsdurchmesser 122 der Hülse 70 ist geringfügig größer als der Außenumfangsdurchmesser 126 des Durchgangsrohrs 10, wodurch die Hülse 70 auf das Kühlmittelrohr 10 aufgeschoben werden kann.

Axial erstreckt sich die Hülse 70 auf der gesamten axialen Länge zwischen Durchgangsrohrhalter 22 und Schleifscheibenauflage 36 - kann aber beiderends jeweils Spiel zu Durchgangsrohrhalter 22 und Schleifscheibenauflage 36 haben.

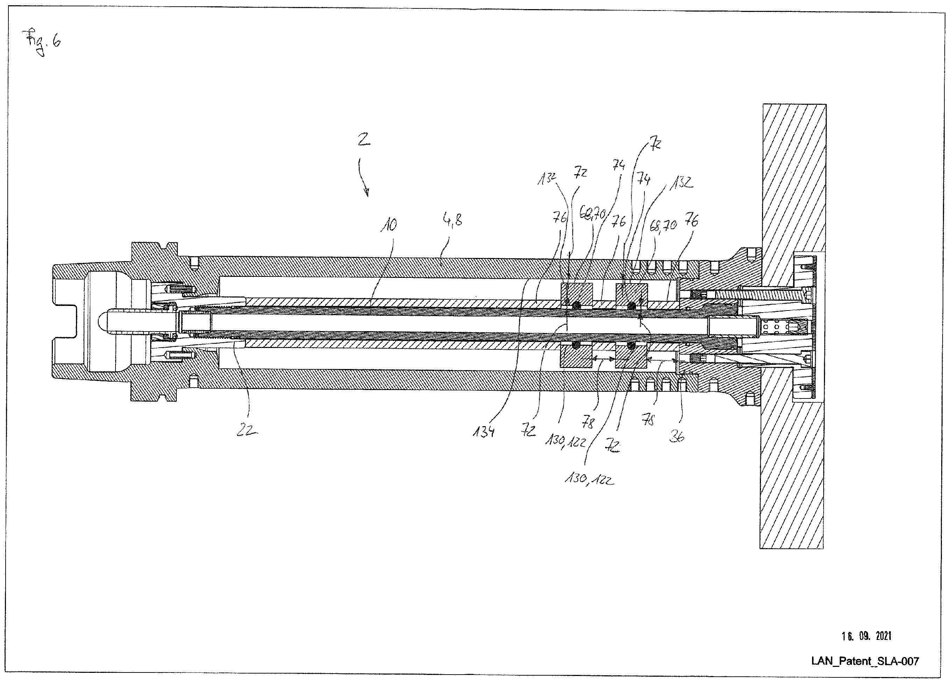

FIG 6 zeigt die Schleifscheibenaufnahme 2, wie sie durch - in diesem Fall zwei - zusätzliche Dämpfungselemente 68 in ihren Dämpfungsverhalten verbessert wird.

Wie FIG 6 zeigt, befinden sich im Inneren der Zylindermantels 8 des Aufnahmegrundkörpers 4 - in diesem Fall - zwei Dämpfungselemente 68 - in Form von Ringscheiben 70.

Diese Ringscheiben 70 sind - über an ihren Innenumfang 130 angeordneten (Gummi-)Ringen 74 in radialem Abstand 72 - auf dem Kühlmittelrohr 10 - koaxial zu Aufnahmegrundkörper 4 und Durchgangsrohr/Kühlmittelrohr 10 - gehalten.

Ist der Außenumfangsdurchmesser 132 der Ringscheiben 70 kleiner als der Innenumfangsdurchmesser 134 des Aufnahmegrundkörpers 4 bzw. dessen Zylindermantel 8, so lassen die Ringscheiben 70 auch einen radialen Abstand 72 zum Aufnahmegrundkörper 4.

Axial in Position (mit Axialabstand 78) gehalten werden die zwei Ringscheiben 70 mittels zwischen und benachbart diesen angeordneten, auf dem Kühlmittelrohr zwischen dem Durchgangsrohrhalter 22 und der Schleifscheibenauflage 36 aufgeschobenen bzw. angeordneten Hülsen 76.

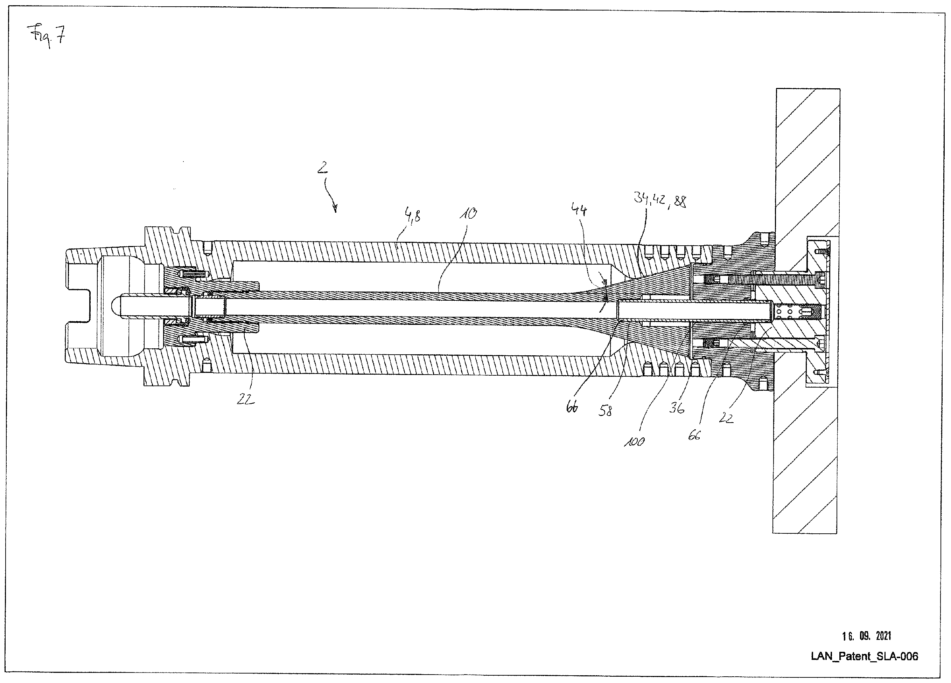

FIG 7 zeigt die Schleifscheibenaufnahme 2 - mit einem modifizierten Verspannungskontakt bzw. -flächen zwischen - in diesem Fall - Kühlmittelrohr 10 und Aufnahmegrundkörper 4 (unmittelbare direkte Verspannung des Durchgangsrohrs 10 mit dem Aufnahmegrundkörper 4).

D.h., der Kraftfluss der Verspannung des Kühlmittelrohres 10 erfolgt nicht über die Schleifscheibenauflage 36 in den Aufnahmegrundkörper 4, sondern unmittelbar und direkt von Kühlmittelrohr 10 auf Aufnahmegrundkörper 4.

Wie FIG 7 zeigt, sieht das Kühlmittelrohr 10 dazu an seinem deckelseitigen Ende eine (einen flachen Außenkonus 42 bildende) konische - mit einen vorgebbaren Konuswinkel 44, hier beispielsweise ca. 15°, - Spannschulter 34 vor, welche gegen eine komplementäre Spannschulter 88 - in diesem Fall - an dem Aufnahmegrundkörper 4 verspannt ist.

Die Hülse 58 - zwischen Kühlmittelrohr 10 einerseits und Spannflansch 22 andererseits - ist so durch die - in diesem Fall schulterfreie/konusfreie, zylindrische - Bohrung 100 in der Schleifscheibenauflage 36 durchgeführt und dort mittels einer ersten Dichtung 66 abgedichtet. Mittels einer zweiten Dichtung 66 ist die Hülse 58 auch gegen das Kühlmittelrohr 10 abgedichtet.

FIG 8 verdeutlicht, dass die - wie im Vorigen beschriebene einstückig mit dem Aufnahmegrundkörper 4 ausgebildete Schnittstelle 82 - auch durch ein separates Bauteil 82 ausgeführt sein kann.

Diese separate Schnittstelle 82 ist dabei, wie FIG 8 zeigt, durch Stifte 136 mit dem Aufnahmegrundkörper 4 - drehfest - verbunden.

Ist so die Schnittstelle 82 als separates Bauteil vorgesehen, wäre es auch möglich (nicht gezeigt), den Durchgangsrohrhalter 22 - anstelle eines separaten Bauteils - einstückig an der Schnittstelle vorzusehen, gewährleistet die durch die separate Schnittstelle 82 teilbare Ausführung von Schnittstelle 82 und Aufnahmegrundkörper 4 ausreichende Zugänglichkeit, welche für die Herstellung und Montage der Schleifscheibenaufnahme 2 notwendig ist.

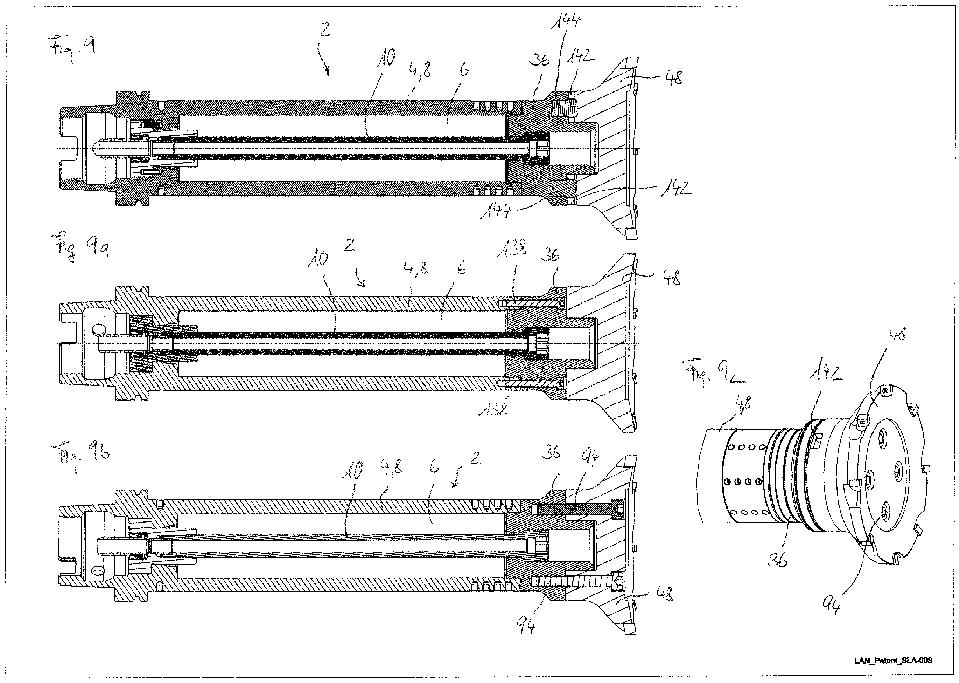

### - (modulare) Messerkopfaufnahme (FIG 9 (mit FIGen 9a,b und c))

In den FIGen 9, 9a bis c ist die Aufnahme 2 für rotierende Werkzeuge - in Ausführung als Messerkopfaufnahme 2 gezeigt. D.h., anstelle der vorbeschriebenen Schleifscheibenaufnahmen 2 (nach den FIGen 1 bis 8, vgl. insbesondere FIG 1), bei welchen als rotierendes Werkzeug die Schleifscheibe 48 in der Aufnahme 2 verspannt gehalten ist, zeigen die FIGen 9, 9a bis c diese für einen Messerkopf 48 - als aufgenommenes Werkzeug.

Da diese Ausführung der Messerkopfaufnahme 2 (nach den FIGen 9, 9a bis c) im Wesentlichen der (beschriebenen) Schleifscheibenaufnahme 2 nach FIG 1 entspricht (mit dem einzigen Unterschied, dass anstelle der Schleifscheibe 48, jetzt ein Messerkopf 48 in der Aufnahme 2 aufgenommen ist), wird in der nachfolgenden Beschreibung auf Wiederholungen von Beschreibungen identischer, gleichverwendeter Bauteilen bei der Messerkopfaufnahme 2 in den FIGen 9, 9a bis c verzichtet. Nur mehr die - den Messerkopf unmittelbar betreffenden - Modifikationen und Weiterbildungen (in den FIGen 9, 9a bis c) werden folgend dargestellt.

Wie die FIGen 9, 9a bis c, insbesondere FIG 9a, zeigen ist der Messerkopf 48 mittels Lang- bzw. Spannschrauben 94 mit der Messerkopfauflage 36 verschraubt.

Mitnehmersteine 144 (vgl. FIG 9) einerseits werkzeugseitig angeordnet in der Messerkopfauflage greifen andererseits in (an der werkzeugseitig abgewandten Seite des Messerkopfes angeordneten) Quernuten ein - und dienen der Drehmomentenmitnahme.

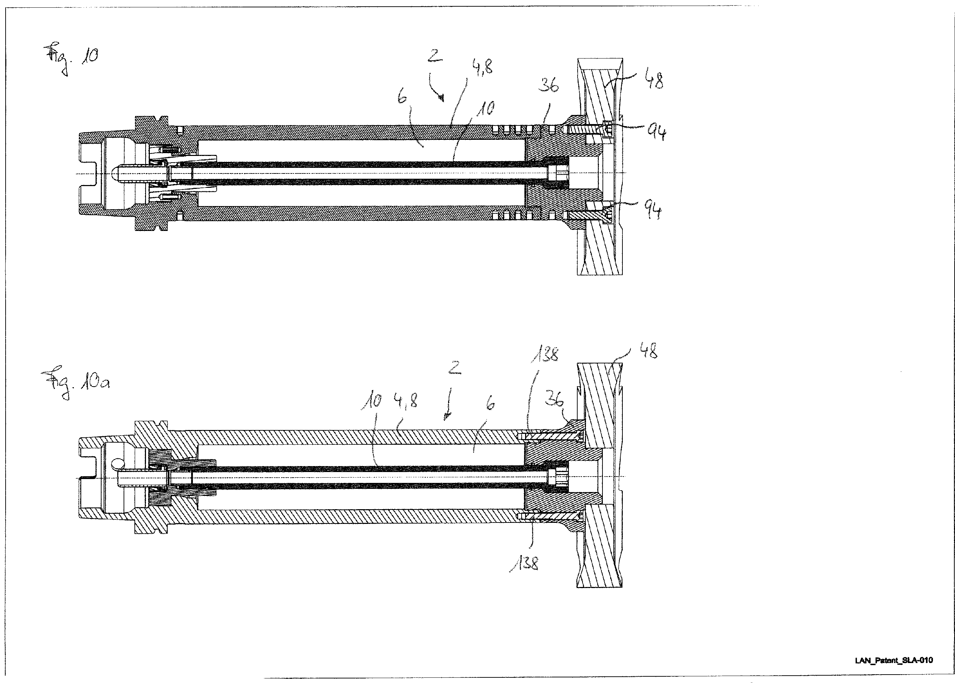

### - (modulare) Scheibenfräseraufnahme (FIG 10 (mit FIG 10a))

In den FIGen 10 und 10a ist die Aufnahme 2 für rotierende Werkzeuge - in Ausführung als Scheibenfräseraufnahme 2 gezeigt. D.h., anstelle der vorbeschriebenen Schleifscheibenaufnahmen 2 (nach den FIGen 1 bis 8, vgl. insbesondere FIG 1) oder Messerkopfaufnahme 2 (nach den FIGen 9, 9a bis 9c), bei welchen als rotierendes Werkzeug die Schleifscheibe 48 oder der Messerkopf 48 in der Aufnahme 2 gehalten ist, zeigen die FIGen 10 und 10a diese für einen Scheibenfräser 48 - als aufgenommenes Werkzeug.

Da diese Ausführung der Scheibenfräseraufnahme 2 (nach den FIGen 10 und 10a) im Wesentlichen der (beschriebenen) Schleifscheibenaufnahme 2 nach FIG 1 entspricht (mit dem einzigen Unterschied, dass anstelle der Schleifscheibe 48, jetzt ein Scheibenfräser 48 in der Aufnahme 2 aufgenommen ist, wird in der nachfolgenden Beschreibung auf Wiederholungen von Beschreibungen identischer, gleichverwendeter Bauteilen bei der Scheibenfräseraufnahme 2 in den FIGen 10 und 10a verzichtet. Nur mehr die - den Scheibenfräser unmittelbar betreffenden - Modifikationen und Weiterbildungen (in den FIGen 9, 9a bis c) werden folgend dargestellt.

Wie die FIGen 10 und 10a zeigen ist der Scheibenfräser 48 mittels Lang- bzw. Spannschrauben 94 mit der Scheibenfräserauflage 36 verschraubt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung , wie durch die Ansprüche definiert, zu verlassen.

### Bezugszeichenliste:

- 2: Aufnahme für ein rotierendes Werkzeug, wie beispielsweise Messerkopf, Sägeblatt, Schleifscheibenaufnahme, (Scheiben-)Fräser
- 4: Aufnahmegrundkörper
- 6: Hohlraum
- 8: Zylindermantel
- 10: Durchgangsrohr, Kühlmitelrohr

- 12: Mittel-/Symmetrie-/Drehachse
- 14: axial, Axialrichtung
- 16: radial, Radialrichtung
- 18: (Außen-) Gewinde
- 20: Verschraubung

- 22: Durchgangsrohrhalter
- 24: Stift, verstiftet
- 26: Kühlmittelzuführrohr
- 28: verschraubt, Verschraubung
- 30: Hülse

- 32: Abdichtung
- 34: Spannschulter
- 36: Werkzeugauflage, Schleifscheibenauflage, Messerkopfauflage, Scheibenfräserauflage
- 38: Verschlussschraube
- 40: Einfüllbohrung

- 42: (Außen-)Konus
- 44: Konuswinkel
- 46: Halte-/Spannelement bzw. Spannschraube/-flansch
- 48: Werkzeug, Messerkopf, Sägeblatt, Schleifscheibe, (Scheiben-) Fräser
- 50: radiale Kühlmittelbohrung
- 52: Verschlussschraube
- 54: (sich axial erstreckende) Kühlmittbohrung
- 56: Schnittstelle (Durchgangsrohr/ Halte-/Spannelement bzw. Spannschraube/-flansch)
- 58: Hülse
- 60: Bohrung (für Wuchtschraube)

- 62: Wuchtschraube (nicht gezeigt)
- 64: Außenumfangsfläche
- 66: abgedichtet, Abdichtung (Kühlmittelrohr), Dichtring
- 68: Dämpfungskörper, Dämpfungs-/Schwingungsmasse
- 70: Ringscheibe, Hülse

- 72: (Radial-) Abstand, (radial) beabstandet
- 74: Ring
- 76: Hülse
- 78: (Axial-)Abstand, (axial) beabstandet
- 80: Dämpfstoff, Elastomer, (Alu-)Schaum

- 82: Schnittstelle, HSK, Steilkegel
- 84: Arbeits-/Schleifspindel (nicht gezeigt)
- 86: Innengewinde (für 18/20)
- 88: (komplementäre) Spannschulter
- 90: Deckel

- 92: Verschraubung (für Deckel)
- 94: Lang-/Spannschraube
- 96: (Durchgangs-)Bohrung
- 98: Gewinde
- 100: Durchgangsbohrung (in der Werkzeug- /Schleifscheibenauflage)
- 102: Flansch
- 104: deckelseitigen Stirnseite des Aufnahmegrundkörpers
- 106: Schulter (am Durchgangrohrhalter)
- 108: (Gegen-)Schulter (für 106)
- 110: Anschlag

- 112: Hülse
- 114: Außenseite
- 116: Durchgangsbohrung
- 120: Außenumfang

- 122: Innenumfangsdurchmesser (von 70)
- 124: Außenumfang
- 126: Außenumfangsdurchmesser (von 22 oder 10)
- 128: Wandstärke
- 130: Innenumfang

- 132: Außenumfangsdurchmesser (von 70)
- 134: Innenumfangsdurchmesser (von 4/8)
- 136: Stift
- 138: (Lang-/Spann-)Schraube
- 140: Dichtring
- 142: Quernut
- 144: Mitnehmerstein

## Patentansprüche

1. Aufnahme für ein rotierendes Werkzeug, mit einem rotationssymmetrischen, hohlzylinderförmigen Aufnahmegrundkörper (4) und einem im Hohlraum des Aufnahmegrundkörpers (4) beabstandet vom Zylindermantel des Aufnahmegrundkörpers (4) gegen den Aufnahmegrundkörper (4) verspannt angeordneten Durchgangsrohr (10), **dadurch gekennzeichnet, dass** an einem Ende des Durchgangsrohrs (10) eine Spannschulter (34) zur Verspannung mit einem mit dem Aufnahmegrundkörper (4) verbundenen, sich dort kraftschlüssig abstützenden anderen Bauteil (36), wie einer Werkzeugauflage, angeordnet ist.

2. Aufnahme nach einem der voranstehenden Ansprüche,
**dadurch gekennzeichnet, dass**
das, insbesondere rotationssymmetrische, Durchgangsrohr koaxial zum Aufnahmekörper in diesem angeordnet ist.

3. Aufnahme nach einem der voranstehenden Ansprüche,
**dadurch gekennzeichnet, dass**
einerends des Durchgangsrohrs ein Gewinde, insbesondere ein Außengewinde für eine Verschraubung mit einem, insbesondere im Aufnahmegrundkörper angeordneten, Durchgangsrohrhalter, am Durchgangsrohr angeordnet ist.

4. Aufnahme nach einem der voranstehenden Ansprüche,
**gekennzeichnet, durch**
einen an dem Aufnahmegrundkörper angeordneten Durchgangsrohrhalter, insbesondere einen mit dem Aufnahmegrundkörper drehfest verbundenen, insbesondere verstifteten Durchgangsrohrhalter.

5. Aufnahme nach einem der voranstehenden Ansprüche,
**dadurch gekennzeichnet, dass**
mit dem Durchgangsrohrhalter ein Kühlmittelzuführrohr verbunden, insbesondere verschraubt, ist und/oder dass zwischen dem Durchgangsrohr und dem Durchgangsrohrhalter eine Hülse angeordnet, insbesondere abgedichtet angeordnet, ist.

6. Aufnahme nach einem der voranstehenden Ansprüche,
**dadurch gekennzeichnet, dass**
die Werkzeugauflage eine Schleifscheibenauflage ist.

7. Aufnahme nach einem der voranstehenden Ansprüche,
**gekennzeichnet, durch**
eine Werkzeugauflage, insbesondere Schleifscheibenauflage, gegen welche das Durchgangsrohr verspannt ist und welche sich an dem Aufnahmegrundkörper abstützt, insbesondere mit dem Aufnahmegrundkörper verschraubt ist.

8. Aufnahme nach einem der voranstehenden Ansprüche,
**dadurch gekennzeichnet, dass**
die Werkzeugauflage, insbesondere die Schleifscheibenauflage, mindestens eine in den Hohlraum mündende, insbesondere mittels einer Verschlussschraube verschließbare, Einfüllbohrung aufweist.

9. Aufnahme nach einem der voranstehenden Ansprüche,
**dadurch gekennzeichnet, dass**
die Spannschulter einen Außenkonus aufweist.

10. Aufnahme nach einem der voranstehenden Ansprüche,
**gekennzeichnet, durch**
einen mit der Werkzeug- bzw. Schleifscheibenauflage verschraubbares Halte-/Spannelement, insbesondere Spannschraube/-flansch, für das Werkzeug, insbesondere die Schleifscheibe.

11. Aufnahme nach einem der voranstehenden Ansprüche,
**gekennzeichnet, durch**
radiale Kühlmitteldurchgangsbohrungen in dem Halte-/Spannelement bzw. Spannschraube/-flansch und/oder durch eine sich axial durch das Halte-/Spannelement bzw. Spannschraube/- flansch hindurch erstreckende, insbesondere mittels einer Verschlussschraube verschließbare, Kühlmittelbohrung.

12. Aufnahme nach einem der voranstehenden Ansprüche,
**gekennzeichnet, durch**
eine an einer Schnittstelle zwischen dem Durchgangsrohr und dem Halte-/Spannelement bzw. Spannschraube/-flansch zwischen dem Durchgangsrohr und dem Halte-/Spannelement bzw. Spannschraube/-flansch angeordnete, insbesondere abgedichtete, Hülse.

13. Aufnahme nach einem der voranstehenden Ansprüche,
**gekennzeichnet, durch**
Bohrungen, insbesondere Gewindebohrungen, für Wuchtschrauben an einer Außenumfangsfläche des Aufnahmegrundkörpers und/oder der Werkzeugauflage bzw. Schleifscheibenauflage.

14. Aufnahme nach einem der voranstehenden Ansprüche,
**dadurch gekennzeichnet, dass**
das Durchgangsrohr ein Kühlmittelrohr, insbesondere ein gegen den Hohlraum abgedichtetes Kühlmittelrohr, ist.

15. Aufnahme nach einem der voranstehenden Ansprüche,
**gekennzeichnet, durch**
mindestens einen im Hohlraum angeordneten Dämpfungskörper.

16. Aufnahme nach einem der voranstehenden Ansprüche,
**dadurch gekennzeichnet, dass**
der mindestens eine Dämpfungskörper eine Ringscheibe oder eine Hülse, insbesondere eine in den Hohlraum eingepresste und/oder verspannte Ringscheibe oder Hülse, insbesondere eine Ringscheibe oder Hülse aus Kunststoff, Metall oder Gummi, ist.

17. Aufnahme nach einem der voranstehenden Ansprüche,
**dadurch gekennzeichnet, dass**
der mindestens eine Dämpfungskörper ein von dem Zylindermantel und/oder vom Durchgangsrohr beabstandet gehaltener, insbesondere mittels eines Ringes, im Speziellen mittels eines Gummi- oder Kunststoffringes beabstandet gehaltener, Dämpfungskörper, insbesondere aus einem (Schwer-)Metall oder einem Kunststoff, ist.

18. Aufnahme nach einem der voranstehenden Ansprüche,
**gekennzeichnet, durch**
mehrere, insbesondere ein Vielzahl, im Hohlraum angeordnete Dämpfungskörper.

19. Aufnahme nach einem der voranstehenden Ansprüche,
**dadurch gekennzeichnet, dass**
die mehreren bzw. die vielen Dämpfungskörper mittels Hülsen axial beabstandet gehaltene Ringscheiben sind, welche insbesondere mittels Ringe, im Speziellen mittels Gummi- oder Kunststoffringe, vom Zylindermantel und/oder vom Durchgangsrohr beabstandet gehalten werden.

20. Aufnahme nach einem der voranstehenden Ansprüche,
**dadurch gekennzeichnet, dass**
in dem Hohlraum ein Dämpfstoff eingebracht ist, insbesondere ein Elastomer oder ein (Alu-)Schaum.

21. Aufnahme nach einem der voranstehenden Ansprüche,
**gekennzeichnet, durch**
eine Schnittstelle für eine Arbeitsspindel, insbesondere einen HSK oder Steilkegel, welche einerends des Aufnahmegrundkörpers mit dem Aufnahmegrundkörper einstückig oder als separates Bauteil verbunden abgeordnet ist.

## Claims

1. Receptacle for a rotating tool, having a rotationally symmetrical, hollow-cylindrical receptacle main body (4), and a through-pipe (10) which is disposed in the cavity of the receptacle main body (4) so as to be spaced apart from the cylinder barrel of the receptacle main body (4) and braced in relation to the receptacle main body (4), **characterized in that** a clamping shoulder (34) for bracing with another component (36), such as a tool bearing, which is connected to the receptacle main body (4) and is supported thereon in a force-fitting manner, is disposed on one end of the through-pipe (10).

2. Receptacle according to one of the preceding claims,
**characterized in that**
the, in particular rotationally symmetrical, through-pipe is disposed in the receptacle body so as to be coaxial with the latter.

3. Receptacle according to one of the preceding claims,
**characterized in that**,
on one end of the through-pipe, a thread, in particular an external thread for screw-fitting to a through-pipe holder which is in particular disposed in the receptacle main body, is disposed on the through-pipe.

4. Receptacle according to one of the preceding claims,
**characterized by**
a through-pipe holder which is disposed on the receptacle main body, in particular a through-pipe holder which is connected in a rotationally fixed manner to the receptacle main body, in particular fitted to the latter by pins.

5. Receptacle according to one of the preceding claims,
**characterized in that**
a coolant supply pipe is connected, in particular screwed, to the through-pipe holder, and/or **in that** a sleeve is disposed between the through-pipe and the through-pipe holder, in particular disposed so as to be sealed.

6. Receptacle according to one of the preceding claims,
**characterized in that**
the tool bearing is a grinding disc bearing.

7. Receptacle according to one of the preceding claims,
**characterized by**
a tool bearing, in particular a grinding disc bearing, in relation to which the through-pipe is braced and which is supported on the receptacle main body, in particular is screwed to the receptacle main body.

8. Receptacle according to one of the preceding claims,
**characterized in that**
the tool bearing, in particular the grinding disc bearing, has at least one filler bore which opens into the cavity and is in particular able to be closed by means of a closure screw.

9. Receptacle according to one of the preceding claims,
**characterized in that**
the clamping shoulder has an external cone.

10. Receptacle according to one of the preceding claims,
**characterized by**
a holding/clamping element, in particular a clamping screw/flange, for the tool, in particular the grinding disc, which is able to be screwed to the tool bearing or grinding disc bearing, respectively.

11. Receptacle according to one of the preceding claims,
**characterized by**
radial coolant through-bores in the holding/clamping element, or clamping screw/flange, and/or by a coolant bore which extends axially through the holding/clamping element or clamping screw/flange, and is in particular able to be closed by means of a closure screw.

12. Receptacle according to one of the preceding claims,
**characterized by**
a sleeve which is disposed on an interface between the through-pipe and the holding/clamping element or clamping screw/flange, respectively, between the through-pipe and the holding/clamping element or clamping screw/flange, respectively, and is in particular sealed.

13. Receptacle according to one of the preceding claims,
**characterized by**
bores, in particular threaded bores, for balancing screws on an external circumferential face of the receptacle main body and/or of the tool bearing or grinding disc bearing, respectively.

14. Receptacle according to one of the preceding claims,
**characterized in that**
the through-pipe is a coolant pipe, in particular a coolant pipe which is sealed in relation to the cavity.

15. Receptacle according to one of the preceding claims,
**characterized by**
at least one damping body which is disposed in the cavity.

16. Receptacle according to one of the preceding claims,
**characterized in that**
the at least one damping body is an annular disc or a sleeve, in particular an annular disc or sleeve that has been press-fitted in the cavity and/or is braced therein, in particular an annular disc or sleeve from plastics material, metal or rubber.

17. Receptacle according to one of the preceding claims,
**characterized in that**
the at least one damping body is a damping body, in particular from a (heavy) metal or a plastics material, which is held so as to be spaced apart from the cylinder barrel and/or from the through-pipe, in particular held so as to be spaced apart by means of a ring, especially by means of a rubber or plastic ring.

18. Receptacle according to one of the preceding claims,
**characterized by**
a plurality, in particular a multiplicity, of damping bodies disposed in the cavity.

19. Receptacle according to one of the preceding claims,
**characterized in that**
the plurality, or the multiplicity, of damping bodies are annular discs which are held so as to be axially spaced apart by means of sleeves, and which are in particular held so as to be spaced apart from the cylinder barrel and/or from the through-pipe by means of rings, especially by means of rubber or plastic rings.

20. Receptacle according to one of the preceding claims,
**characterized in that**
a damping material, in particular an elastomer or an (aluminium) foam, is incorporated in the cavity.

21. Receptacle according to one of the preceding claims,
**characterized by**
an interface for a working spindle, in particular an HSC or steep cone, which is disposed on one end of the receptacle main body so as to be integrally connected to the receptacle main body or so as to be connected as a separate component.

## Revendications

1. Logement pour un outil rotatif, avec un corps de base de logement (4) à symétrie de rotation, en forme de cylindre creux, et un tube de passage (10) agencé dans l'espace creux du corps de base de logement (4), à distance de l'enveloppe cylindrique du corps de base de logement (4), serré contre le corps de base de logement (4), **caractérisé en ce qu'**à une extrémité du tube de passage (10) est agencé un épaulement de serrage (34) pour le serrage avec un autre composant (36), tel qu'un support d'outil, relié au corps de base de logement (4), s'y appuyant par adhérence.

2. Logement selon l'une quelconque des revendications précédentes,
**caractérisé en ce que**
le tube de passage, notamment à symétrie de rotation, est agencé coaxialement au corps de réception dans celui-ci.

3. Logement selon l'une quelconque des revendications précédentes,
**caractérisé en ce que**
à une extrémité du tube de passage, un filetage, notamment un filetage extérieur pour un vissage avec un soutien de tube de passage, notamment agencé dans le corps de base de logement, est agencé sur le tube de passage.

4. Logement selon l'une quelconque des revendications précédentes,
**caractérisé par**
un soutien de tube de passage agencé sur le corps de base de logement, notamment un soutien de tube de passage relié de manière solidaire en rotation au corps de base de réception, notamment goupillé.

5. Logement selon l'une quelconque des revendications précédentes,
**caractérisé en ce que**
un tube d'amenée de fluide de refroidissement est relié, notamment vissé, au soutien de tube de passage et/ou **en ce qu'**une douille est agencée, notamment agencée de manière étanche, entre le tube de passage et le soutien de tube de passage.

6. Logement selon l'une quelconque des revendications précédentes,
**caractérisé en ce que**
le support d'outil est un support de disque de meulage.

7. Logement selon l'une quelconque des revendications précédentes,
**caractérisé par**
un support d'outil, notamment un support de disque de meulage, contre lequel le tube de passage est serré et qui s'appuie sur le corps de base de logement, notamment est vissé avec le corps de base de logement.

8. Logement selon l'une quelconque des revendications précédentes,
**caractérisé en ce que**
le support d'outil, notamment le support de disque de meulage, présente au moins un alésage de remplissage débouchant dans la cavité, pouvant notamment être fermé au moyen d'une vis de fermeture.

9. Logement selon l'une quelconque des revendications précédentes,
**caractérisé en ce que**
l'épaulement de serrage présente un cône extérieur.

10. Logement selon l'une quelconque des revendications précédentes,
**caractérisé par**
un élément de maintien/serrage, notamment une vis/bride de serrage, pour l'outil, notamment le disque de meulage, pouvant être vissé sur le support d'outil ou de disque de meulage.

11. Logement selon l'une quelconque des revendications précédentes,
**caractérisé par**
des alésages de passage de fluide de refroidissement radiaux dans l'élément de maintien/serrage ou la vis/bride de serrage et/ou par un alésage de fluide de refroidissement s'étendant axialement à travers l'élément de maintien/serrage ou la vis/bride de serrage, notamment pouvant être fermé au moyen d'une vis de fermeture.

12. Logement selon l'une quelconque des revendications précédentes,
**caractérisé par**
une douille, notamment étanche, agencée à une interface entre le tube de passage et l'élément de maintien/serrage ou la vis/bride de serrage entre le tube de passage et l'élément de maintien/serrage ou la vis/bride de serrage.

13. Logement selon l'une quelconque des revendications précédentes,
**caractérisé par**
des alésages, notamment des alésages filetés, pour des vis d'équilibrage sur une surface périphérique extérieure du corps de base de logement et/ou du support d'outil ou du support de disque de meulage.

14. Logement selon l'une quelconque des revendications précédentes,
**caractérisé en ce que**
le tube de passage est un tube de fluide de refroidissement, notamment un
tube de fluide de refroidissement étanche par rapport à la cavité.

15. Logement selon l'une quelconque des revendications précédentes,
**caractérisé par**
au moins un corps d'amortissement agencé dans la cavité.

16. Logement selon l'une quelconque des revendications précédentes,
**caractérisé en ce que**
l'au moins un corps d'amortissement est un disque annulaire ou une douille, notamment un disque annulaire ou une douille enfoncé(e) et/ou serré(e) dans la cavité, notamment un disque annulaire ou une douille en matière plastique, en métal ou en caoutchouc.

17. Logement selon l'une quelconque des revendications précédentes,
**caractérisé en ce que**
l'au moins un corps d'amortissement est un corps d'amortissement maintenu à distance de l'enveloppe cylindrique et/ou du tube de passage, notamment au moyen d'une bague, en particulier au moyen d'une bague en caoutchouc ou en matière plastique, notamment en un métal (lourd) ou en une matière plastique.

18. Logement selon l'une quelconque des revendications précédentes,
**caractérisé par**
plusieurs, notamment une pluralité, de corps amortisseurs agencés dans la cavité.

19. Logement selon l'une quelconque des revendications précédentes,
**caractérisé en ce que**
les plusieurs ou les nombreux corps d'amortissement sont des disques annulaires maintenus à distance axiale au moyen de douilles, qui sont notamment maintenus à distance de l'enveloppe cylindrique et/ou du tube de passage au moyen de bagues, en particulier au moyen de bagues en caoutchouc ou en matière plastique.

20. Logement selon l'une quelconque des revendications précédentes,
**caractérisé en ce que**
un matériau amortisseur est introduit dans la cavité, notamment un élastomère ou une mousse (d'aluminium).

21. Logement selon l'une quelconque des revendications précédentes,
**caractérisé par**
une interface pour une broche de travail, notamment un cône HSK ou un cône à grande conicité, qui est agencée à une extrémité du corps de base de logement et est reliée au corps de base de logement d'un seul tenant ou en tant que composant séparé.
